(19) **Europäisches Patentamt**
**European Patent Office**
**Office européen des brevets**

(11) **EP 1 676 056 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(51) Int Cl.:
**F16H 48/08** (2006.01)

(21) Anmeldenummer: **04790549.2**

(22) Anmeldetag: **18.10.2004**

(86) Internationale Anmeldenummer:
**PCT/EP2004/011716**

(87) Internationale Veröffentlichungsnummer:
**WO 2005/040641 (06.05.2005 Gazette 2005/18)**

(54) **DIFFERENTIALACHSENKREUZ FÜR EIN AUSGLEICHSGETRIEBE**

DIFFERENTIAL AXES OF COORDINATES FOR A DIFFERENTIAL GEAR

INTERSECTION D'AXES DIFFERENTIELS POUR ENGRENAGE DIFFERENTIEL

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.10.2003 DE 10348546**

(43) Veröffentlichungstag der Anmeldung:
**05.07.2006 Patentblatt 2006/27**

(73) Patentinhaber: **GKN Driveline International GmbH 53797 Lohmar (DE)**

(72) Erfinder:
• **CHLUDEK, Adrian**
**53757 St. Augustin (DE)**

• **GÖRLICH, Horst**
**50321 Brühl-Badorf (DE)**

(74) Vertreter: **Oberwalleney, Stephan et al Neumann Müller Oberwalleney & Partner Patentanwälte Brandstrasse 10 53721 Siegburg (DE)**

(56) Entgegenhaltungen:
**EP-A- 0 864 779        DE-A1- 3 634 394
DE-A1- 19 619 891        DE-A1- 19 919 515
DE-C1- 4 424 202        DE-U- 1 827 697
US-A- 3 894 447**

**Beschreibung**

Die Erfindung betrifft einen Differentialkorb für ein Differentialgetriebe, der um seine Längsachse A drehbar gelagert und drehend antreibbar ist, mit zwei Ausgangsrädern, die koaxial zur Längsachse A im Differentialkorb gelagert sind, und vier Ausgleichsrädern, die auf einem Zapfenkreuz mit vier radial zur Längsachse A im Differentialkorb gehaltenen Lagerzapfen drehbar angeordnet sind und jeweils mit den Ausgangsrädern im Verzahnungseingriff sind.

Aus der US 3 894 447 A ist ein solcher Differentialkorb für ein Differentialgetriebe bekannt, in dem ein Zapfenkreuz mit vier radial zur Längsachse verlaufenden Lagerzapfen gehalten ist. Das Zapfenkreuz umfaßt einen einstückigen ersten Zapfen mit einer zentralen Queröffnung, in die ein zweiter Zapfen eingesteckt ist. Der zweite Zapfen hat einen Abschnitt größeren Durchmessers, auf dem ein Ausgleichsrad zu lagern ist und einen hieran anschließenden Abschnitt kleineren Durchmessers, der die Queröffnung durchdringt. Auf diesen Abschnitt kleineren Durchmessers ist eine Zapfenhülse aufgeschoben, auf der ein weiteres Ausgleichsrad gelagert ist. Zwischen dem ersten und dem zweiten Abschnitt hat der zweite Zapfen einen konischen übergangsbereich.

Ein weiterer Differentialkorb ist aus der DE 199 19 515 C2 bekannt. Hier werden vier zugekeilte Lagerzapfen für vier Ausgleichskegelräder mittig zu einem Zapfenkreuz verschweißt. Nachteilig ist hierbei, daß die Zapfen hierfür in eine geeignete Vorrichtung eingespannt werden müssen und nach dem Verschweißen des Zapfenkreuzes die Zapfen gerichtet werden müssen- Die Kosten für den Schweißvorgang mit den genannten Einricht- und Richtvorgängen sind nachteilig hoch.

Aus der gattungsgemäßen EP 0 864 779 A1 ist ein Differentialgetriebe mit vier Lagerzapfen für vier Ausgleichskegelräder bekannt. Dabei sind zwei der Lagerzapfen einstückig gestaltet und weisen eine Querbohrung auf. In die Querbohrung sind die beiden senkrecht zum einstückigen Lagerzapfen verlaufenden Lagerzapfen jeweils mit einem inneren ersten Abschnitt eingesteckt. Der Übergang vom eingesteckten ersten Abschnitt zum das Ausgleichsrad tragenden zweiten Abschnitt ist sprunghaft, so daß es hier zu Kerbwirkung kommen kann.

Aus der DE 36 34 394 A1 ist ein ähnliches Differentialgetriebe mit vier Lagerzapfen für vier Ausgleichskegelräder bekannt. Dabei weisen die Lagerzapfen über den Umfang verteilte Schmiernuten zum gleitenden Lagern der Ausgleichsräder auf den Lagerzapfen auf. Die Lagerzapfen sind in Radialbohrungen im Differentialkorb aufgenommen und durch einen um den Differentialkorb umlaufenden Sicherungsring gehalten.

Aus der DE 44 24 202 C1 ist ein Differentialgetriebe bekannt, das zur Betätigung eine Reibungskupplung aufweist, die in dem Differentialkorb angeordnet ist.

Der Erfindung liegt die Aufgabe zugrunde, einen Differentialkorb der eingangs genannten Art vorzuschlagen, der im Bereich des Zapfenkreuzes des Differentialkorbes eine verbesserte Lösung mit einer höheren Steifigkeit bietet.

Die Lösung besteht darin, daß zwei erste einander gegenüberliegende Lagerzapfen des Zapfenkreuzes miteinander verbunden sind und zumindest eine zentrale Queröffnung bilden, und daß zwei zweite Lagerzapfen des Zapfenkreuzes getrennt von den ersten Lagerzapfen ausgeführt sind und jeweils einen ersten Abschnitt zum Einstecken in die zumindest eine Queröffnung, einen zweiten Abschnitt zur Aufnahme des zugehörigen Ausgleichsrads sowie einen den ersten und den zweiten Abschnitt verbindenden Übergangsabschnitt mit einem in Richtung zum zweiten Abschnitt stetig zunehmenden Durchmesser aufweisen. Hiermit ist die Möglichkeit gegeben, die Anzahl der Zapfenteile auf zwei zu reduzieren und das Zapfenkreuz nach Art einer Steckverbindung im Differentialkorb zusammenzusetzen. Aufgrund des Zusammenfügens erst im Differentialkorb ergibt sich eine verbesserte Montagemöglichkeit der Ausgleichsräder auf den Zapfen, die es zuläßt, einen zumindest einseitig topfartig geschlossenen Differentialkorb zu verwenden, der auf Montageöffnungen für die Ausgleichsräder am Umfang verzichtet. In dem Fall, daß zwei erste und lediglich ein zweiter Lagerzapfen verwendet werden, können auftretende Unwuchten durch entsprechende Ausgleichsmassen am Differentialkorb ausgeglichen werden. Eine symmetrische Zapfenkreuzanordnung ergibt sich bei Verwendung von insgesamt vier Lagerzapfen, wobei zwei zweite Lagerzapfen in zwei erste Lagerzapfen eingesteckt sind.

In bevorzugter Ausführung sind die ersten Zapfen einstückig miteinander verbunden, wobei an einem durchgehenden Rundstab im wesentlichen nur die Querbohrung zur Aufnahme der zweiten Zapfen ausgeführt werden muß. Grundsätzlich wäre es auch möglich, zwei Einzelzapfen mit Halbzylinderausnehmungen an ihren Enden unter Bildung einer inneren Queröffnung zu verschweißen.

Anstelle der Querbohrung zwischen den beiden ersten Zapfen können auch zwei Ansenkungen im Verbindungsbereich der beiden ersten Zapfen vorgesehen sein, in die die beiden zweiten Zapfen mit ihren inneren Enden jeweils nur bis zum Boden der Ansenkung eingesteckt werden.

Bei den ersten Lagerzapfen liegt das Verhältnis des ersten Durchmessers d der Queröffnung zum zweiten Durchmesser der Lagerstelle zwischen 0,4 und 0,6, wobei die Grenzwerte mit eingeschlossen sein sollen. Auch für die zweiten Lagerzapfen ist es besonders günstig, wenn das Verhältnis des ersten Durchmessers d zum zweiten Durchmesser D zwischen 0,4 und 0,6 liegt. So ergibt sich eine optimale Festigkeit der die Querbohrung umgebenden Stege im Verhältnis zum eingesteckten ersten Abschnitt des zweiten Zapfens.

Vorzugsweise hat der Übergangsabschnitt des eingesteckten Zapfens im Anschluß an den ersten Abschnitt einen ersten Radius R1 mit einem Verhältnis 0,4 ≤ R1/D ≤ 0,6 auf, wobei D der Durchmesser des zweiten Abschnitts ist. Im Anschluß an den zweiten Abschnitt weist der Übergangsabschnitt einen zweiten Radius R2 auf, wobei auch hier ein Verhältnis von 0,4 ≤ R2/D ≤ 0,6 besonders günstig ist. Zwischen den beiden Radien R1, R2 befindet sich eine konische Mantelfläche, die mit der Zapfenachse einen Winkel a einschließt, der kleiner ist als ein Winkel, der zwischen einer den Übergangsabschnitt einhüllenden gedachten Kegelfläche und der Längsachse eingeschlossenen ist. Durch diese Maßnahmen wird die Kerbwirkung in den zweiten Lagerzapfen minimiert und eine besonders günstige Spannungsverteilung erreicht.

Die Zapfen werden bevorzugt in durchgehende Radialbohrungen im Differentialkorb eingesetzt, wobei sie nach außen mit in diese Radialbohrungen eingesetzte Sicherungsringen abgestützt werden. Die Ausgleichsräder sind vorzugsweise gleitend auf den Zapfen gelagert. Zur Verbesserung der Schmierung ist hierbei vorgesehen, die Zapfen mit längsverlaufenden Schmiernuten oder Schmiertaschen oder umfangsverlaufenden Schmiernuten zu versehen, die teilweise über den Lagerbereich der Ausgleichsräder hinausreichen, so daß Schmiermittel der Lagerstelle zugeführt werden kann.

In günstiger Ausführung ist vorgesehen, daß der topfartig ausgebildete Differentialkorb einen angeformten Flansch an dem topfartig geschlossenen Ende des Differentialkorbs hat. Dabei wird der Differentialkorb an dem dem Flansch axial entgegenliegenden Ende mit einem Deckel verschlossen. Soweit vorgesehen ist, ein Differentialgetriebe als sperrbares Differentialgetriebe auszubilden, wird im Differentialkorb ein Lamellenpaket vorzugsweise zwischen der Anordnung aus Zapfenkreuz, Ausgleichsrädern und Ausgangsrädern einerseits und dem genannten Deckel andererseits angeordnet. Soweit das Differentialgetriebe mit einer drehzahldifferenzfühlenden Betätigungsvorrichtung, beispielweise nach Art einer Scherpumpe, versehen ist, wird diese bevorzugt zwischen dem Lamellenpaket und dem Deckel eingesetzt.

Ungeachtet der Tatsache, daß bevorzugt Ausgleichskegelräder und Ausgangskegelräder vorgeschlagen werden und dargestellt sind, ist es auch möglich, die Ausgleichsräder als Stirnräder und die Ausgangsräder als Kronenräder auszuführen.

Ein bevorzugtes Ausführungsbeispiel der Erfindung ist in den Zeichnungen dargestellt und wird nachstehend beschrieben.

Figur 1      zeigt einen Differentialkorb mit einem erfindungsgemäßen Zapfenkreuz im Längsschnitt;

Figur 2      zeigt das Zapfenkreuz nach Figur 1 mit aufgesetzten Ausgleichsrädern im Querschnitt;

Figur 3      zeigt das Zapfenkreuz nach Figur 2 als Einzelheit;

Figur 4      zeigt die beiden ersten Zapfen des erfindungsgemäßen Zapfenkreuzes nach Figur 3;

Figur 5      zeigt einen der beiden zweiten Zapfen des erfindungsgemäßen Zapfenkreuzes nach Figur 3 als Einzelheit in zwei Ansichten;

Figur 6      zeigt ein Zapfenkreuz nach einer zweiten Ausführungsform mit aufgesetzten Ausgleichsrädern im Querschnitt;

Figur 7      zeigt das Zapfenkreuz nach Figur 6 als Einzelheit;

Figur 8      zeigt einen der beiden zweiten Lagerzapfen eines erfindungsgemäßen Zapfenkreuzes nach einer der vorstehenden Figuren im Detail.

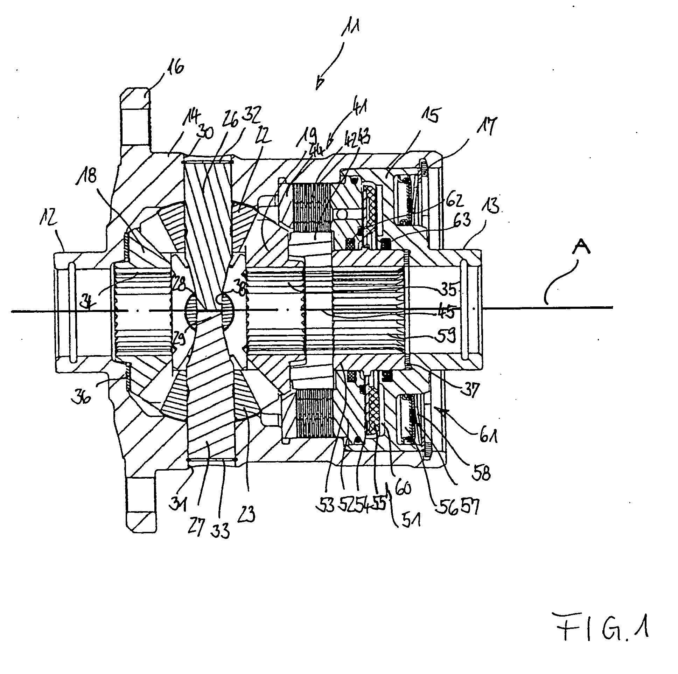

In Figur 1 ist ein Differentialkorb 11 gezeigt, der im Gehäuse eines Differentialgetriebes drehbar zu lagern ist. Hierbei findet die Lagerung insbesondere auf zwei Hülsenansätzen 12, 13 statt, die koaxial zur Längsachse A des Differentialkorbs ausgebildet sind. Der Differentialkorb besteht aus einem topfartigen ersten Teil 14 mit einem daran einstückig angeformten Flansch 16 sowie einem in das erste Teil 14 eingesetzten Deckel 15. Am Flansch ist ein Tellerrad zum drehenden Antrieb des Differentialkorbes anschraubbar. Der erste Hülsenansatz 12 ist einstückig mit dem ersten Teil 14 und der zweite Hülsenansatz 13 einstückig mit dem Deckel 15 verbunden. Der Dekkel 15 ist mittels eines Sicherungsringes 17 in Anlage gegen einen Absatz im topfartigen Teil 14 gehalten. Der Sicherungsring 17 hat eine nach außen weisende Konusfläche, so daß der Deckel 15 spielfrei im ersten Teil 14 verbaut ist. Im Differentialkorb 11 sind zwei koaxial zur Längsachse A angeordnete Ausgleichskegelräder 18, 19 sowie eine Anzahl von vier Ausgleichskegelrädern mit jeweils radial zur Längsachse A liegender Drehachse angeordnet, von denen zwei (22, 23) in dieser Figur zu erkennen sind. Die vier Ausgleichskegelräder sind jeweils im Verzahnungseingriff mit den beiden Ausgangskegelrädern 18, 19 und über dem Umfang gleichmäßig verteilt angeordnet. Die erkennbaren Ausgleichskegelräder 22, 23 laufen jeweils gleitend auf zweiten Lagerzapfen 26, 27, die in radiale Bohrungen 30, 31 im ersten Teil 14 eingesteckt sind und mittels Sicherungsringen 32, 33 nach radial außen in diesen gehalten sind. Mit ihren im Durchmesser reduzierten inneren Enden 28, 29 stützen sich die zweiten Lagerzapfen 26, 27 unmittelbar aneinander ab. Hierbei werden diese Zapfen durch ein erstes Paar Lagerzapfen 24, 25, das erst später erläutert werden kann, seitlich abgestützt und relativ zueinander gehalten. Der Differentialkorb 11 in der hier dargestellten Ausgestaltung gehört zu einem sperrbaren Differentialgetriebe und umfaßt eine Lamellenkupplung 41 und eine Scherpumpenanordnung 51, wie sie beispielsweise in der DE 196 19 891 C2 der Anmelderin beschrieben sind. Es werden daher nur die wesentlichen Einzelteile benannt. Die Lamellenkupplung 41 umfaßt ein Lamellenpaket 42 aus ersten Lamellen, die mit dem Gehäuseteil 14 drehfest verbunden sind, und zweiten Lamellen, die mit einer Kupplungsnabe 43 verbunden sind. Das Lamellenpaket 42 stützt sich an einer Stützscheibe 44 im ersten Teil 14 axial ab, wenn es von einem Stellkolben 52 der Scherpumpenanordnung 51 axial beaufschlagt wird. Die Scherpumpe 51 umfaßt weiter eine mit einer Pumpennabe 53 verbundene Scherlamelle 54 sowie ein gegenüber dem Deckelteil 15, das zugleich das Pumpengehäuse bildet, begrenzt verdrehbares Schernut- und Steuerelement 55. Im Deckelteil 15 ist ein Pumpenraum 60 gebildet, in dem die Scherlamelle 54 und das Schernut- und Steuerelement 55 einliegen. Im Deckelteil 15 ist weiterhin ein aus einem Ringraum 56, einem Ringdeckel 57 und einer Tellerfeder 58 gebildetes Reservoir 61 erkennbar, das über nicht dargestellte Bohrungen mit dem Pumpenraum 60 der Scherpumpe 51 verbunden ist. Das Ausgangskegelrad 18 hat eine Innenverzahnung 34, in die eine erste Seitenwelle eingesteckt werden kann; das Ausgangskegelrad 19 hat eine zweite Innenverzahnung 35, in die eine zweite Ausgangswelle eingesteckt werden kann. Übereinstimmend mit der Innenverzahnung 35 ist eine Innenverzahnung 45 der Kupplungsnabe 43 und eine Innenverzahnung 59 der Pumpennabe 53 ausgebildet. Durch Einstecken einer zweiten Seitenwelle werden hierdurch das Ausgangskegelrad 19, die Kupplungsnabe 43 und die Pumpennabe 53 drehfest miteinander verbunden. Als Folge hiervon wird bei einer Drehzahldifferenz zwischen dem Ausgangskegelrad 19 und dem Differentialkorb 11 ein Druck in der Scherpumpe 51 aufgebaut, durch den der Kolben 52 gegen das Lamellenpaket 42 verschoben wird, so daß das Ausgangskegelrad 19 gegenüber dem Differentialkorb 1.1 abgebremst wird. Der Kolben 52 und der Deckel 15 sind durch Dichtungen 62, 63 gegenüber der Pumpennabe 53 abgedichtet. Das Ausgangskegelrad 18 und die Pumpennabe 53 sind über Gleitscheiben 36, 37 gegenüber dem Differentialkorb 11 axial reibungsarm abgestützt.

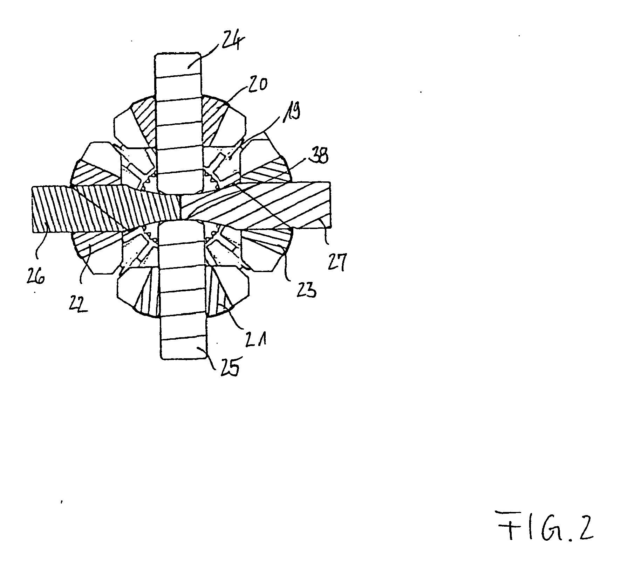

In Figur 2 ist die Anordnung aus Ausgleichskegelrädern 20, 21, 22, 23 und Lagerzapfen 24, 25, 26, 27 als Unterbaugruppe in Ansicht in Richtung der Längsachse A gezeigt, die hier nicht dargestellt ist. Hierbei ist erkennbar, daß die ersten Zapfen 24, 25 einstückig ausgebildet sind und eine Querbohrung 38 haben, in die die zweiten Zapfen 26, 27 mit inneren ersten Abschnitten 28, 29 im wesentlichen spielfrei einsteckbar sind, so daß sie quer zu ihrer Längserstreckung gesichert sind. Weiterhin ist erkennbar, daß die zweiten Zapfen 26, 27 unabhängig voneinander ausgeführt sind und mit ihren inneren ersten Abschnitten 28, 29 flächig aneinanderstoßen. Aus der Bauweise des in Figur 1 gezeigten Differentialkorbs 11 und der hier gezeigten Anordnung der Lagerzapfen und Ausgleichsräder ergibt sich, daß die Ausgleichsräder 20, 21, 22, 23 bei noch nicht montiertem Deckel 15 in das erste Gehäuseteil 14 eingeführt werden können, das dann zunächst die einheitliche Zapfenanordnung 24, 25 quer in den Differentialkorb 11 eingeführt wird, wobei die Ausgleichskegelräder 20, 21 auf ihre Lagerzapfen aufgefädelt werden und daß schließlich die Zapfen 25, 26 radial in den Differentialkorb eingesteckt werden, wobei die Ausgleichskegelräder 22, 23 auf ihre Lagerzapfen aufgefädelt werden und diese in die Querbohrung 38 bis zum gegenseitigen Anschlag eingesteckt werden. Danach können die Lagerzapfen 24, 25, 26, 27 durch Sicherungsringe im Differentialkorb gesichert werden.

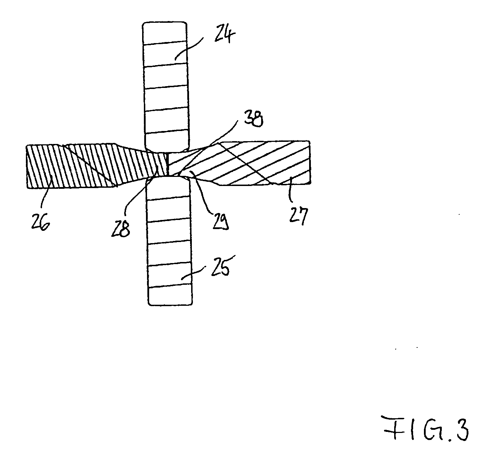

In Figur 3 sind gleiche Einzelheiten wie in Figur 2 mit gleichen Ziffern belegt. Auf die Beschreibung wird insoweit Bezug genommen. Es ist ausschließlich die Zapfenkreuzanordnung gezeigt. Mit schrägen Linien sind an den Zapfen 26, 27 Schmiermittelnuten 68, 69 angedeutet.

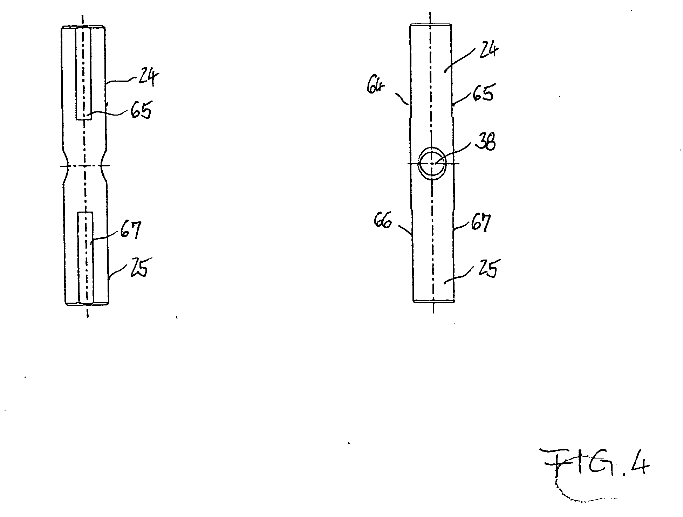

In Figur 4 ist das einstückig ausgebildete Zapfenpaar 24, 25 mit der Querbohrung 38 als Einzelheit dargestellt. Es ist weiterhin im Bereich der Ausgleichsräderlagerung jeweils ein Paar von Abflachungen 64, 65, 66, 67 an den Zapfen erkennbar, das der Schmiermittelzuführung im Bereich der Lagerung der Ausgleichsräder dient.

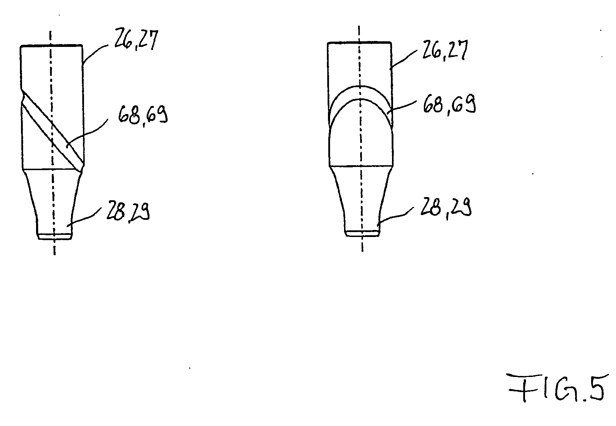

In Figur 5 ist einer der Lagerzapfen 26, 27 als Einzelheit in zwei Seitenansichten erkennbar, wobei zum einen die Durchmesserreduzierung an den inneren Enden 28, 29 und zum anderen die als schräge Umfangsnut ausgeführte Schmiermittelnut 68, 69 erkennbar ist, die ebenfalls der Schmiermittelzuführung unter die Ausgleichsräder dient.

Die Art der Schmiermittelnuten nach den Figuren 4 und 5 kann auch sinngemäß vertauscht werden oder sämtliche Schmiermittelnuten können übereinstimmend nach Art der in Figur 4 oder nach Art der in Figur 5 gezeigten Nuten in allen Lagerzapfen ausgeführt werden.

In Figur 6 ist eine zweite Ausführungsform einer Anordnung aus Ausgleichskegelrädern 20, 21, 22 und Lagerzapfen 24, 25, 26 als Unterbaugruppe in Ansicht in Richtung der Längsachse A gezeigt. Dabei sind gleiche Einzelheiten mit gleichen Ziffern wie in Figur 2 belegt, auf deren Beschreibung insoweit Bezug genommen wird. Die Anordnung nach Figur 6 unterscheidet sich lediglich dadurch, daß nur drei Zapfen 24, 25, 26 vorgesehen sind. Dabei sind die zwei ersten Zapfen 24, 25 einstückig gestaltet und weisen die Querbohrung 38 auf, in die der zweite Zapfen 26 mit seinem ersten Abschnitt 28 eingesteckt ist. Diese Ausführungsform ist kostengünstiger herstellbar, da auf einen Lagerzapfen mit zugehörigem Ausgleichsrad verzichtet werden kann. Unwuchten können durch eine entsprechende Masseverteilung im hier nicht dargestellten Differentialkorb ausgeglichen werden.

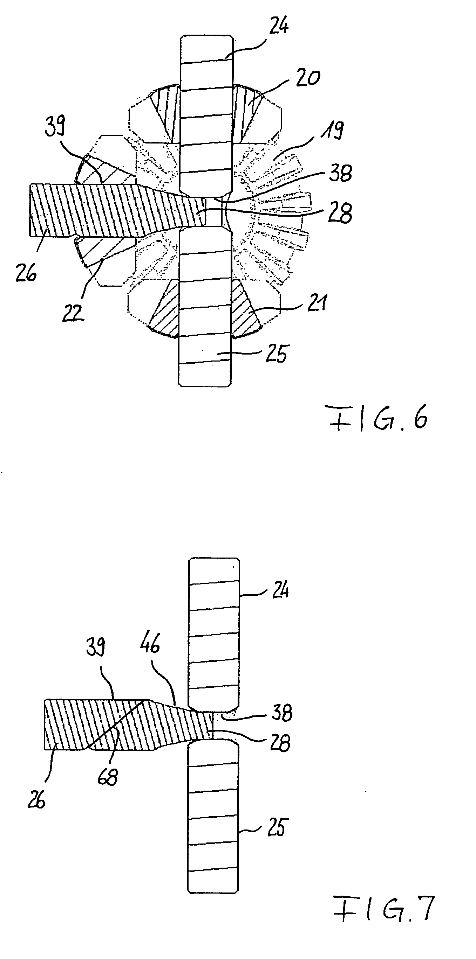

In Figur 7 sind gleiche Einzelheiten wie in Figur 6 mit gleichen Ziffern belegt. Auf die Beschreibung wird insoweit Bezug genommen. Es ist ausschließlich die Zapfenkreuzanordnung gezeigt. Mit einer schrägen Linie ist an dem Zapfen 26 eine Schmiermittelnut 68 angedeutet.

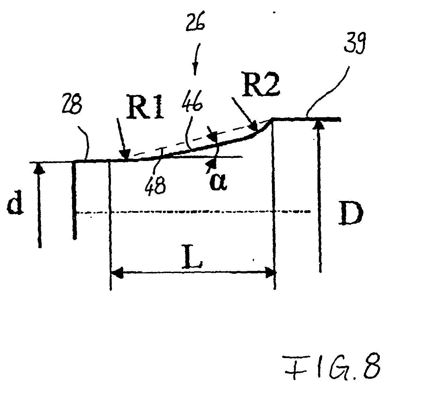

Figur 8 zeigt das innere Ende eines zweiten Zapfens 26, 27 nach einer der vorgenannten Ausführungsformen. Es ist ersichtlich, daß der zweite Zapfen 26 einen ersten Abschnitt 28 mit reduziertem Durchmesser d zum Einstecken in die Querbohrung 38 des hier nicht dargestellten ersten Zapfens 24, 25, einen zweiten Abschnitt 39 mit einem größeren Durchmesser D zum Lagern eines zugehörigen Ausgleichsrads 22 sowie einen den ersten und den zweiten Abschnitt 28, 39 verbindenden Übergangsabschnitt 46 aufweist, der einen in Richtung zum zweiten Abschnitt 39 stetig zunehmenden Durchmesser hat. Der Durchmesser d des ersten Abschnitts 28 entspricht dabei etwa dem Durchmesser der Querbohrung 38, wobei zwischen Zapfen und Bohrung eine Spielpassung ausgebildet ist. Das Verhältnis des ersten Durchmessers d des ersten Abschnitts 28 zum zweiten Durchmesser D des zweiten Abschnitts 39 liegt zwischen 0,4 und 0,6, d.h. $0,4 \leq d/D \leq 0,6$. Durch dieses Verhältnis ergibt sich eine optimale Steifigkeit des eingesteckten Zapfens 26 im Verhältnis zur Steifigkeit des Zapfens 24, 25 mit Querbohrung 38. Es ist weiterhin ersichtlich, daß der Übergangsabschnitt 46 benachbart zum ersten Abschnitt 28 einen ersten Radius R1 aufweist und benachbart zum zweiten Abschnitt 39 einen zweiten Radius R2 aufweist. Die Radien R1 und R2 sind besonders groß gewählt, so daß die Kerbwirkung minimiert und eine gleichmäßige Spannungsverteilung erreicht wird. Das Verhältnis des ersten Radius R1 zum Durchmesser D des zweiten Abschnitts 39 liegt daher zwischen 0,4 und 0,6, wobei die Grenzwerte mit eingeschlossen sind, d.h. $0,4 \leq R1/D \leq 0,6$. Auch für das Verhältnis zwischen dem zweiten Radius R2 und dem Durchmesser D gilt $0,4 \leq R2/D \leq 0,6$ für einen optimalen Spannungsverlauf zwischen dem Übergangsabschnitt 46 und dem zweiten Abschnitt 39. Der Winkel a, der zwischen einer konischen Mantelfläche des Übergangsabschnitts 46 und der Zapfenachse eingeschlossen ist, ist kleiner als ein Winkel, der zwischen einer den Übergangsabschnitt 46 einhüllenden gedachten Kegelfläche 48 und der Zapfenachse eingeschlossenen ist. Das bedeutet,

$$a \leq \arctan\left(0,5 \cdot (D - d) / L\right),$$

wobei L die Länge des Übergangsabschnitts 46 ist. Durch diesen Verlauf ergibt sich ebenfalls eine besonders hohe Festigkeit und eine gute Spannungsverteilung.

Bezugszeichenliste

| 11 | Differentialkorb |
| 12 | Lagerhülse |
| 13 | Lagerhülse |
| 14 | Topf |
| 15 | Deckel |
| 16 | Flansch |
| 17 | Sicherungsring |
| 18 | Ausgangskegelrad |
| 19 | Ausgangskegelrad |
| 20 | Ausgleichskegelrad |
| 21 | Ausgleichskegelrad |
| 22 | Ausgleichskegelrad |
| 23 | Ausgleichskegelrad |
| 24 | Lagerzapfen |
| 25 | Lagerzapfen |
| 26 | Lagerzapfen |
| 27 | Lagerzapfen |
| 28 | inneres Ende / erster Abschnitt |
| 29 | inneres Ende / erster Abschnitt |
| 30 | Bohrung |
| 31 | Bohrung |
| 32 | Sicherungsring |
| 33 | Sicherungsring |
| 34 | Innenverzahnung |
| 35 | Innenverzahnung |
| 36 | Gleitscheibe |
| 37 | Gleitscheibe |
| 38 | Querbohrung |
| 39 | zweiter Abschnitt |
| 41 | Lamellenkupplung |
| 42 | Lamellenpaket |
| 43 | Kupplungsnabe |
| 44 | Stützplatte |
| 45 | Innenverzahnung |
| 46 | Übergangsabschnitt |
| 48 | Kegelfläche |
| 51 | Scherpumpe |
| 52 | Kolben |
| 53 | Pumpennabe |
| 54 | Pumpenlamelle |
| 55 | Schernut- und Steuerelement |
| 56 | Ringraum |
| 57 | Ringdeckel |
| 58 | Tellerfeder |
| 59 | Innenverzahnung |
| 60 | Pumpenraum |
| 61 | Reservoir |
| 62 | Dichtung |
| 63 | Dichtung |
| 64 | Abflachung |
| 65 | Abflachung |
| 66 | Abflachung |
| 67 | Abflachung |
| 68 | Schmiermittelnut |
| 69 | Schmiermittelnut |

**Patentansprüche**

1. Differentialkorb (11) für ein Differentialgetriebe, der um seine Längsachse A drehbar gelagert und drehend antreibbar ist, umfassend zwei Ausgangsräder (18, 19), die koaxial zur Längsachse A im Differentialkorb (11) gelagert sind, und mehreren Ausgleichsräder (20, 21, 22, 23), die auf einem Zapfenkreuz mit zumindest vier radial zur Längsachse A im Differentialkorb (11) gehaltenen Lagerzapfen (24, 25, 26, 27) drehbar angeordnet sind und jeweils mit den Ausgangsrädern (18,19) im Verzahnungseingriff sind, wobei zwei erste einander gegenüberliegende Lagerzapfen (24, 25) des Zapfenkreuzes miteinander verbunden sind und zumindest eine zentrale Queröffnung (38) bilden, wobei zwei zweite einander gegenüberliegende Lagerzapfen (26, 27) des Zapfenkreuzes getrennt von den ersten Lagerzapfen (24, 25) ausgeführt sind, und die zwei zweiten Lagerzapfen (26, 27) jeweils einen ersten Abschnitt (28, 29) mit einem ersten Durchmesser (d) zum Einstecken in die zumindest eine Queröffnung (38), einen zweiten Abschnitt (39) mit einem größeren zweiten Durchmesser (D) zur Aufnahme des zugehörigen Ausgleichsrads (22, 23) aufweiser, **gekennzeichnet durch** einen den ersten und den zweiten Abschnitt (28, 29; 39) verbindenden Übergangsabschnitt (46) mit einem stetig zunehmenden Durchmesser.

2. Differentialkorb nach Anspruch 1, **dadurch gekennzeichnet, daß** die ersten Lagerzapfen (24, 25) einstückig miteinander ausgeführt sind.

3. Differentialkorb nach Anspruch 1 oder 2, **dadurch gekennzeichnet, daß** die Queröffnung (38) einen ersten Durchmesser aufweist und die ersten Lagerzapfen (24, 25) im Bereich der Ausgleichsräder (20, 21) einen zweiten Durchmesser aufweisen, wobei das Verhältnis des ersten Durchmessers zum zweiten Durchmesser zwischen 0,4 und 0,6 liegt.

4. Differentialkorb nach einem der Ansprüche 1 bis 3, **dadurch gekennzeichnet, daß** am zumindest einen zweiten Lagerzapfens (26, 27) das Verhältnis des ersten Durchmessers (d) des ersten Abschnitts (28, 29) zum zweiten Durchmesser (D) des zweiten Abschnitt (39) zwischen 0,4 und 0,6 liegt.

5. Differentialkorb nach einem der Ansprüche 1 bis 4, **dadurch gekennzeichnet, daß** der Übergangsabschnitt (46) des eingesteckten Zapfens (26, 27) im Anschluß an den ersten Abschnitt (28, 29) einen ersten Radius (R1) aufweist, wobei das Verhältnis des ersten Radius (R1) zum Durchmesser (D) des zweiten Abschnitts (39) zwischen 0,4 und 0,6 liegt.

6. Differentialkorb nach einem der Ansprüche 1 bis 5, **dadurch gekennzeichnet, daß** der Übergangsabschnitt (46) des eingesteckten Zapfens (26, 27) im Anschluß an den zweiten Abschnitt (39) einen zweiten Radius (R2) aufweist, wobei das Verhältnis des zweiten Radius (R2) zum Durchmesser (D) des zweiten Abschnitts (39) zwischen 0,4 und 0,6 liegt.

7. Differentialkorb nach einem der Ansprüche 1 bis 6, **dadurch gekennzeichnet, daß** der Übergangsabschnitt (46) eine konische Mantelfläche aufweist, die mit der Zapfenachse einen Winkel (a) einschließt, der kleiner ist als ein Winkel, der zwischen einer den Übergangsabschnitt (46) einhüllenden gedachten Kegelfläche (48) und der Längsachse eingeschlossen ist.

8. Differentialkorb nach einem der Ansprüche 1 bis 7, **dadurch gekennzeichnet, daß** zwei zweite Lagerzapfen (26, 27) vorgesehen sind, die sich mit ihren ersten Abschnitten (28, 29) unmittelbar aneinander abstützen.

9. Differentialkorb nach einem der Ansprüche 1 bis 8, **dadurch gekennzeichnet, daß** die Lagerzapfen (24, 25, 26, 27) in Radialbohrungen (30, 31) im Differentialkorb (11) eingesetzt sind und radial nach außen mit Sicherungsringen (32, 33) gesichert sind.

10. Differentialkorb nach einem der Ansprüche 1 bis 9, **dadurch gekennzeichnet, daß** die Ausgleichsräder (20, 21, 22, 23) unmittelbar gleitend auf den Lagerzapfen (24, 25, 26, 27) gelagert sind.

11. Differentialkorb nach einem der Ansprüche 1 bis 10, **dadurch gekennzeichnet, daß** die Lagerzapfen (24, 25, 26, 27) im Bereich der Lagerung der Ausgleichskegelräder (20, 21, 22, 23) Schmiernuten (64 - 69) aufweisen.

12. Differentialkorb nach einem der Ansprüche 1 bis 11, **dadurch gekennzeichnet, daß** er einen einteilig angeformten Flansch (16) aufweist.

13. Differentialkorb nach Anspruch 12, **dadurch gekennzeichnet, daß** er ein den Flansch (16) tragendes erstes topfartiges Teil (14) und einen - bezogen auf das Zapfenkreuz - zum Flansch (16) axial entgegengesetzt

angeordneten Dekkel (15) umfaßt.

14. Differentialkorb nach einem der Ansprüche 1 bis 13, **dadurch gekennzeichnet,** **daß** zwischen der Anordnung aus dem Zapfenkreuz, den Ausgleichsrädern (20, 21, 22, 23) und den Ausgangsrädern (18, 19) einerseits und dem Deckel (15) andererseits eine Sperrkupplung (41) im Differentialkorb (11) angeordnet ist.

15. Differentialkorb nach Anspruch 14, **dadurch gekennzeichnet,** **daß** zwischen der Sperrkupplung (41) und dem Dekkel (15) eine Scherpumpenanordnung (51) angeordnet ist.

**Claims**

1. A differential carrier (11) for a differential drive, which differential carrier (11) is rotatably supported around its longitudinal axis A and which is rotatingly drivable, comprising
   two output gears (18, 19) which are supported in the differential carrier (11) coaxially relative to the longitudinal axis A, and
   a plurality of differential gears (20, 21, 22, 23) which are rotatably supported on a cross member, said cross member having four bearing arms (24, 25, 26, 27), said bearing arms (24, 25, 26, 27) extending radially relative to the longitudinal axis A and being held in the differential carrier (11), said differential gears (20, 21, 22, 23) meshingly engage the output gears (18, 19),
   wherein two first bearing arms (24, 25) of the cross member positioned opposite one another are connected to one another and form at least one central transverse aperture (38), and
   wherein two second bearing arms (26, 27) of the cross member positioned opposite one another are produced separately from said two first bearing arms (24, 25), wherein said second bearing arms (26, 27) each comprise a first portion (28, 29) with a first diameter (d) for being inserted into the at least one transverse aperture (38), a second portion (39) with a greater second diameter (D) for receiving the associated differential gear (22, 23),
   **characterized in**
   a transition portion (46) connecting the first and the second portion (28, 29; 39) and having a continuously increasing diameter.

2. A differential carrier according to claim 1, **characterised in** **that** the first bearing arms (24, 25) are produced so as to form one piece.

3. A differential carrier according to claim 1 or 2,

**characterised in** **that** the transverse aperture (38) comprises a first diameter and that, in the region of the differential gears (20, 21), the first bearing arms (24, 25) comprise a second diameter, wherein the ratio of the first diameter to the second diameter ranges between 0.4 and 0.6.

4. A differential carrier according to any one of claims 1 to 3, **characterised in** **that** at the at least one second bearing arm (26,27), the ratio of the first diameter (d) of the first portion (28, 29) relative to the second diameter (D) of the second portion (39) ranges between 0.4 to 0.6.

5. A differential carrier according to any one of claims 1 to 4, **characterised in** **that**, in the region adjoining the first portion (28, 29), the transition portion (46) of the inserted arm (26, 27) comprises a first radius (R1), wherein the ratio of the first radius (R1) relative to the diameter (D) of the second portion (39) ranges between 0.4 and 0.6.

6. A differential carrier according to any one of claims 1 to 5, **characterised in** **that**, in the region adjoining the second portion (39), the transition portion (46) comprises a second radius (R2), wherein the ratio of the second radius (R2) relative to the diameter (D) of the second portion (39) ranges between 0.4 and 0,6.

7. A differential carrier according to any one of claims 1 to 6, **characterised in** **that** the transition portion (46) comprises a conical outer face which, together with the arm axis, encloses an angle (a) which is smaller than an angle which is enclosed between an imaginary conical face (48) enveloping the transition portion (46) and the longitudinal axis.

8. A differential carrier according to any one of claims 1 to 7, **characterised in** **that** there are provided two second bearing arms (26, 27) which directly support one another by means of their first portions (28, 29).

9. A differential carrier according to any one of claims 1 to 8, **characterised in** **that** the bearing arms (24, 25, 26, 27) are inserted into radial bores (30, 31) in the differential carrier (11) and are secured radially outwardly with securing rings (32, 33).

**10.** A differential carrier according to any one of claims 1 to 9,
**characterised in**
**that** the differential gears (20, 21, 22, 23) are directly slidingly supported on the bearing arms (24, 25, 26, 27).

**11.** A differential carrier according to any one of claims 1 to 10,
**characterised in**
**that**, in the region of the bearing of the differential gears (20, 21, 22, 23), the bearing arms (24, 25, 26, 27) comprise lubricating grooves (64-69).

**12.** A differential carrier according to any one of claims 1 to 11,
**characterised in**
**that** it comprises an integrally formed-on flange (16).

**13.** A differential carrier according to claim 12,
**characterised in**
**that** it comprises a dish-shaped part (14) carrying the flange and that it further comprises a cover (15) which, with reference to the cross member, is arranged axially opposite the flange (16).

**14.** A differential carrier according to any one of claims 1 to 13,
**characterised in**
**that** between the assembly consisting of the cross member, the differential gears (20, 21, 22, 23) and the output gears (18, 19) on the one hand and the cover (15) on the other hand, there is arranged a locking coupling (41) in the differential carrier (11).

**15.** A differential carrier according to claim 14,
**characterised in**
**that** between the locking coupling (41) and the cover (15), there is arranged a shear pump assembly (51).

**Revendications**

**1.** Cage de différentiel (11) pour un mécanisme différentiel, qui est montée en rotation autour de son axe longitudinal A et qui est susceptible d'être entraînée en rotation, comprenant :

deux pignons de sortie (18, 19) qui sont montés dans la cage de différentiel (11) coaxialement à l'axe longitudinal A, et
plusieurs pignons de compensation (20, 21, 22, 23) qui sont agencés en rotation sur un croisillon comportant au moins quatre tourillons de palier (24, 25, 26, 27) maintenus radialement par rapport à l'axe longitudinal (A) dans la cage de différentiel (11) et qui sont en engrènement respectif avec les pignons de sortie (18, 19),

dans laquelle deux premiers tourillons de palier (24, 25) mutuellement opposés du croisillon sont reliés l'un à l'autre et forment au moins une ouverture transversale centrale (38), et
dans laquelle deux seconds tourillons de palier (26, 27) mutuellement opposés du croisillon sont réalisés séparément des premiers tourillons de palier (24, 25), et
dans laquelle les deux seconds tourillons de palier (26, 27) comprennent chacun un premier tronçon (28, 29) avec un premier diamètre (d) pour être enfiché dans ladite au moins une ouverture transversale (38), et un second tronçon (39) d'un second diamètre (D) plus grand pour recevoir le pignon de compensation associé (22, 23),
**caractérisée par** un tronçon de transition (46) qui relie le premier et le second tronçon (28, 29 ; 39) et qui présente un diamètre constamment croissant.

**2.** Cage de différentiel selon la revendication 1,
**caractérisée en ce que** les premiers tourillons de palier (24, 25) sont réalisés d'une seule pièce l'un avec l'autre.

**3.** Cage de différentiel selon la revendication 1 ou 2,
**caractérisée en ce que** l'ouverture transversale (38) présente un premier diamètre, et les premiers tourillons de palier (24, 25) présentent dans la région des pignons de compensation (20, 21) un second diamètre, le rapport du premier diamètre sur le second diamètre étant entre 0,4 et 0,6.

**4.** Cage de différentiel selon l'une des revendications 1 à 3,
**caractérisée en ce que**, au niveau d'au moins un second tourillon de palier (26, 27), le rapport du premier diamètre (d) du premier tronçon (28, 29) sur le second diamètre (D) du second tronçon (39) est entre 0,4 et 0,6.

**5.** Cage de différentiel selon l'une des revendications 1 à 4,
**caractérisée en ce que** le tronçon de transition (46) du tourillon (26, 27) enfiché présente, à la suite du premier tronçon (28, 29), un premier rayon (R1), le rapport du premier rayon (R1) sur le diamètre (D) du second tronçon (39) étant entre 0,4 et 0,6.

**6.** Cage de différentiel selon l'une des revendications 1 à 5,
**caractérisée en ce que** le tronçon de transition (46) du tourillon (26, 27) enfiché présente, à la suite du second tronçon (39), un second rayon (R2), le rapport du second rayon (R2) sur le diamètre (D) du second tronçon (39) étant entre 0,4 et 0,6.

**7.** Cage de différentiel selon l'une des revendications 1 à 6,

**caractérisée en ce que** le tronçon de transition (46) présente une surface enveloppe conique qui définit avec l'axe du tourillon un angle (a) qui est inférieur à un angle défini entre une surface conique imaginaire (48) qui enveloppe le tronçon de transition (46) et l'axe longitudinal.

8. Cage de différentiel selon l'une des revendications 1 à 7,
   **caractérisée en ce qu'**il est prévu deux tourillons de palier (26, 27) qui se soutiennent directement l'un l'autre par leurs premiers tronçons (28, 29).

9. Cage de différentiel selon l'une des revendications 1 à 8,
   **caractérisée en ce que** les tourillons de palier (24, 25, 26, 27) sont mis en place dans des perçages radiaux (30, 31) dans la cage de différentiel (11) et sont bloqués radialement vers l'extérieur avec des bagues de blocage (32, 33).

10. Cage de différentiel selon l'une des revendications 1 à 9,
    **caractérisée en ce que** les pignons de compensation (20, 21, 22, 23) sont montés directement en coulissement sur les tourillons de palier (24, 25, 26, 27).

11. Cage de différentiel selon l'une des revendications 1 à 10,
    **caractérisée en ce que** les tourillons de palier (24, 25, 26, 27) présentent des gorges de lubrification (64-69) dans la région du montage des pignons coniques de compensation (20, 21, 22, 23).

12. Cage de différentiel selon l'une des revendications 1 à 11,
    **caractérisée en ce qu'**elle comprend une bride (16) conformée d'un seul tenant.

13. Cage de différentiel selon la revendication 12,
    **caractérisée en ce qu'**elle comprend une première partie (14) en forme de godet qui porte la bride (16), et un couvercle (15) agencé axialement à l'opposé de la bride (16), par référence au croisillon.

14. Cage de différentiel selon l'une des revendications 1 à 13,
    **caractérisée en ce que**, entre l'agencement formé par le croisillon, par les pignons de compensation (20, 21, 22, 23) et par les pignons de sortie (18, 19) d'une part et le couvercle (15) d'autre part, est agencé un accouplement de blocage (41) dans la cage de différentiel (11).

15. Cage de différentiel selon la revendication 14,
    **caractérisée en ce qu'**un agencement à pompe de cisaillement (51) est agencé entre l'accouplement de blocage (41) et le couvercle (15).

FIG.1

FIG. 2

FIG.3

FIG. 4

26,27

68,69

28,29

26,27

68,69

28,29

FIG.5

FIG.6

FIG.7

FIG. 8